# FASCICULE DE BREVET EUROPEEN

(11) **EP 0 935 215 B1**
(45) Date de publication et mention de la délivrance du brevet: **19.05.2004**
(21) Numéro de dépôt: 99400068.5
(22) Date de dépôt: 12.01.1999
(51) Int. Cl.: G06K 19/077

(54) **Procédé de fixation d'un module électronique dans une cavité d'un corps d'object portable, notamment corps de carte, par ultrasons**
Verfahren zur ultrasonischen Befestigung eines elektronisches Moduls in einer Ausnehmung eines tragbaren Gegenstandskörpers, insbesondere Kartenkörpers
Process for fixing an electronic module in a recess of a body of a portable object, in particular a card body, by ultrasonics

(30) Priorité: 27.01.1998 FR 9800857
(43) Date de publication de la demande: 11.08.1999
(73) Titulaire: SCHLUMBERGER Systèmes, 92120 Montrouge (FR)
(72) Inventeur: Limelette, Yann, 33bis, rue du Faubourg Madeleine, 45000 Orleans (FR); Rietzler, Jean, 45100 Orleans (FR)

(56) Documents cités:
- EP-A- 0 359 632
- EP-A- 0 472 768
- US-A- 4 737 620

## Description

La présente invention a trait à un procédé de fixation d'un module électronique dans une cavité d'un corps d'objet portable, notamment corps de carte à mémoire, ledit module électronique comportant un composant à circuits intégrés connecté à des plages de contact portées par un substrat isolant.

Pour la fabrication des cartes à mémoire, différentes techniques, connues du public ou non, sont susceptibles d'être mises en oeuvre.

Selon l'une des techniques connues du public, on réalise, d'une part, un module électronique et, d'autre part, un corps de carte comportant une cavité.

Pour la réalisation du module électronique, on fixe généralement un composant à circuits intégrés sur une première face d'un substrat isolant, ledit composant à circuits intégrés étant relié, par des fils conducteurs traversant des trous pratiqués dans ledit substrat, à des plages de contact électrique portées par une deuxième face de ce substrat.

Pour la réalisation du corps de carte, on assemble, par colaminage à chaud, plusieurs couches plastiques dont certaines sont usinées de manière à former une cavité, ou alors, on moule une matière plastique dans un moule comportant un noyau destiné à donner une forme appropriée à ladite cavité.

Il suffit alors de déposer, dans la cavité du corps de carte, quelques gouttes voire un joint d'un adhésif du type cyano-acrylate, puis de reporter le module électronique dans ladite cavité en exerçant, sur ledit module électronique, une pression de manière que la fixation du module dans la cavité s'effectue correctement.

Ces techniques connues du public présentent différents inconvénients. Tout d'abord, elles exigent le stockage de l'adhésif, par nature très réactif. Ensuite, le temps de mise en oeuvre de l'étape de dépôt de l'adhésif dans la cavité additionné au temps d'attente du collage durant lequel une pression est appliquée sur le module électronique est, dans le cadre d'une fabrication industrielle des cartes, considérable, en pratique de l'ordre de soixante secondes. De plus, des changements de matériaux ou alors des conditions de température ou d'humidité de l'air, bref, de l'environnement climatique, influent considérablement sur la réaction de polymérisation de l'adhésif sans que les variations de cette réaction soient prévisibles avec exactitude. L'efficacité du collage du module électronique n'est donc pas garantie avec une absolue certitude. En outre, l'emploi d'un adhésif du type cyano-acrylate est dangereux, des vapeurs toxiques se dégageant en effet au cours de l'étape de collage voire ultérieurement, ces vapeurs étant susceptibles de nuire à la santé du personnel travaillant à la fabrication des cartes en l'absence d'un système d'aspiration de l'air. Enfin, dans certaines conditions d'utilisation, la colle cyano-acrylate, réactivée, dégage les vapeurs toxiques précitées, pollue le module, sa fixation étant par ailleurs altérée.

Selon une technique non connue du public et qui a fait l'objet d'un dépôt d'une demande de brevet en France enregistrée sous le numéro 97 04430, pour la fixation d'un module électronique dans une cavité d'un corps de carte, on dépose, dans ladite cavité, un adhésif, on reporte ledit module électronique dans ladite cavité et on le soumet, simultanément, à une force de pressage ainsi qu'à des vibrations ultrasonores.

La demande de brevet européen publiée sous le numéro 0 359 632 décrit un procédé d'encapsulation de circuits intégrés notamment pour cartes à puces. Ce procédé comprend l'étape de coller ensemble (ou souder par ultrasons) deux matières : la matière plastique de surmoulage présente sur un micromodule, d'une part, et la matière plastique d'une carte, d'autre part.

Le demande de brevet européen publiée sous le numéro 0 472 768 décrit un procédé pour fixer un module à puce sur une carte à puce. Avant la fixation du module à puce, la surface de la matière plastique renforcée avec de la fibre de verre est traitée de facon qu'une surface de profondeur rugueux accru soit constituée.

Compte tenu de ce qui précède, un problème que se propose de résoudre l'invention est de fixer un module électronique par une méthode rapide et sûre offrant toutes garanties d'une fixation correcte et stable, sans danger.

Un procédé de fixation d'un module électronique selon l'invention est définit dans la revendication 1. Ce procédé comprend en outre une étape préalable de traitement du substrat du module électronique. Cette étape est de manière que le substrat présente, sur sa face au regard de la cavité, des microcavités.

On notera que de manière avantageuse, les parties thermoplastiques de la cavité sont en polychlorure de vinyle, acrylonitrile butadiène styrène, polyéthylène téréphtalate ou en polycarbonate ; le substrat est en époxy ou en polycarbonate.

L'invention sera mieux comprise à la lecture de la description non limitative qui suit, rédigée au regard des dessins annexés, dans lesquels :
- la figure 1 montre, en coupe transversale, un premier mode de fixation d'un module dans une cavité d'un corps de carte qui n'est pas selon l'invention;
- la figure 2 montre, en coupe transversale, un second mode de fixation d'un module dans une cavité d'un corps de carte qui n'est pas selon l'invention;
- la figure 3 présente, en vue de dessus une première variante de réalisation d'une cavité pour la mise en oeuvre du second mode de fixation ;
- la figure 4 présente, en vue de dessus, une seconde variante de réalisation d'une cavité pour la mise en oeuvre du second mode de fixation ;
- la figure 5 montre, en coupe transversale, un mode de fixation d'un module dans une cavité d'un corps de carte selon l'invention ;
- la figure 6 schématise un dispositif à ultrasons ; et
- la figure 7 détaille, en coupe longitudinale, un dispositif à ultrasons.

L'invention concerne des objets portables à mémoire. Il s'agit en particulier d'objets normalisés au format carte ou jeton. Dans le cas spécifique des objets à mémoire au format carte ici décrit, on se reportera notamment aux normes ISO 78-10 et 78-16.

Les cartes visées dans la présente invention possèdent un corps 10 de carte ainsi qu'un module 20 électronique reporté dans une cavité 30 dudit corps 10.

Le corps 10 de carte est sensiblement parallélépipèdique et rectangle. Ces dimensions sont de l'ordre de 85 mm de long, de 54 mm de large et de 0,8 mm d'épaisseur et ledit corps 10 comporte de ce fait deux grandes faces sensiblement parallèles. Il se compose bien souvent de différentes couches colaminées à chaud. Certaines desdites couches présentent un orifice. L'ensemble des orifices superposés définit la cavité 30 débouchante du corps 10 de carte.

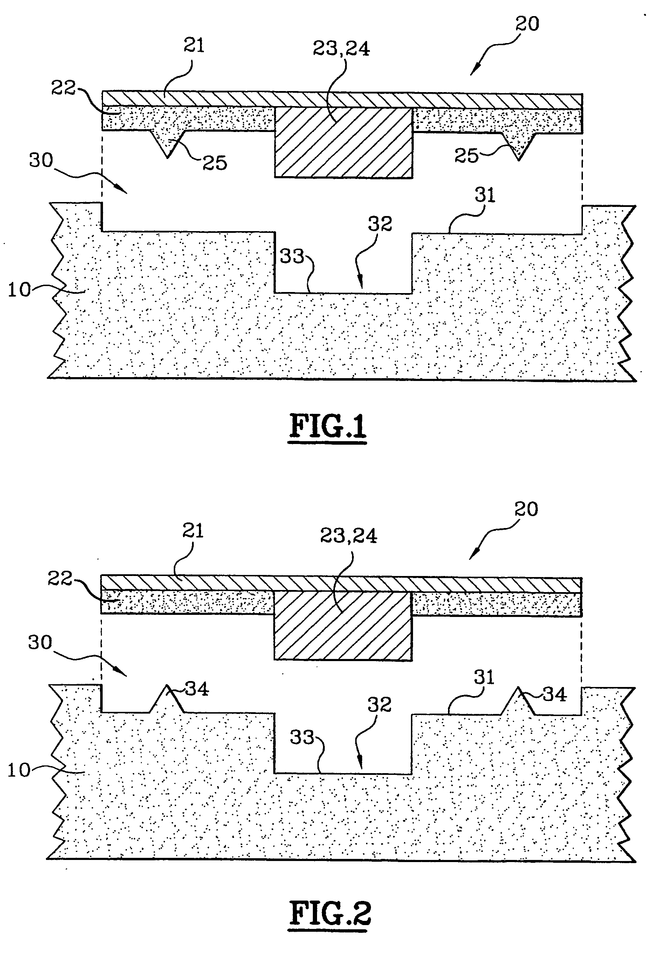

Ainsi que cela est plus particulièrement montré aux figures 1 à 5, la cavité 30 comporte un fond 31. Ce fond 31 est sensiblement parallèle aux grandes faces du corps 10 de carte et comporte un logement 32 dont le fond 33 est lui-même sensiblement parallèle auxdites grandes faces.

La cavité 30 comporte des parties thermoplastiques. Compte tenu du fait que les couches constitutives du corps 10 de carte sont bien souvent thermoplastiques, en acrylonitrile butadiène styrène (ABS), polychlorure de vinyle (PVC). polyéthylène téréphtalate (PET) ou en polycarbonate (PC), ou alors, plus rarement, thermodurcissables, en polyméthyl méthacrylate (PMMA) par exemple, l'ensemble de la cavité 30 est en général thermoplastique et les parties thermoplastiques précitées de la cavité 30 sont alors des parties de l'ensemble de la cavité 30. Il est néanmoins possible que ces parties thermoplastiques soient constituées par des concentrateurs 34 d'énergie du fond 31 de la cavité 30.

Le module 20 électronique, dont la structure est schématisée en coupe transversale aux figures 1, 3 et 5, comporte, sur sa face affleurante à la surface du corps 10 de carte, des plages 21 métalliques. Ces plages 21 sont portées par un substrat 22 plastique thermodurcissable, par exemple d'époxy, ou thermoplastique, par exemple en PC. Un composant 23 à circuits intégrés est collé sur la face arrière des plages 21 ou sur le substrat 22. Ce composant 23, ou puce, est connecté aux plages 21, par des fils de connexion non représentés, le cas échéant, au travers de trous débouchants ménagés dans le substrat 22. Il est par ailleurs noyé dans une résine 24. Aussi, le module 20 comporte en définitive une partie centrale formée par le composant 23 enrobé de résine 24 ainsi qu'une partie latérale formée par l'empilement des plages 21 sur le substrat 22.

A noter que les cartes peuvent être du type sans contact, le corps 10 de carte possédant alors une antenne dont des bornes sont connectées à des plages du module 20 au travers de puits ménagés dans le fond 31 de la cavité, remplis d'une résine conductrice.

Pour la fixation du module 20 dans la cavité 30, on reporte ledit module 20 dans ladite cavité 30. Le composant 23 enrobé de résine 24, constituant la partie centrale du module 20, vient alors se placer dans le logement 32. Les parties latérales du module 20 viennent par contre se placer sur le fond 31 de la cavité, le substrat 22 dudit module 20 venant au contact dudit fond 31.

On soumet alors le module 20 à une énergie ultrasonore. Le module 20 vibre alors dans la cavité 30 et la quantité de chaleur libérée par friction induit notamment une augmentation de la température des parties thermoplastiques de la cavité 30. Lorsque la température de transition vitreuse Tg des parties thermoplastiques est atteinte, celles-ci font l'objet d'un ramollissement assurant ainsi la fixation du module 20 dans la cavité 30. Dans un exemple, les températures de transition vitreuse Tg des matériaux thermoplastiques précités sont :

| | |
|---|---|
| PVC | 65 à 80 °C environ |
| PET | 75 à 80 °C environ |
| ABS | 70 à 100 °C environ |
| PC | 120 °C environ |

Le module 20 montré à la figure 1, comporte, sur sa face arrière, c'est-à-dire sur sa face opposée à sa face présentant les plages 21, des concentrateurs 25 d'énergie ultrasonore. Ces concentrateurs 25 sont des excroissances thermoplastiques ou thermodurcissables, portées par le substrat 22 dont la base est plus large que l'extrémité. Il s'agit par exemple de pyramides ou de profilés ou cordons à section sensiblement triangulaire. Le fond 31 de la cavité 30 est thermoplastique.

Lorsque le module 20 est reporté dans la cavité 30, les extrémités des concentrateurs 25 viennent au contact de parties thermoplastiques du fond 31 de la cavité 30. En soumettant le module 20 à une énergie ultrasonore, les concentrateurs 25 concentrent l'énergie ultrasonore sur lesdites parties. Les forces de friction échauffent lesdites parties jusqu'à leur température de transition vitreuse Tg. Les parties font alors l'objet d'un ramollissement et les concentrateurs 25 pénètrent lesdites parties assurant une fixation efficace du module 20 dans la cavité 30 par cloutage.

Néanmoins, dans le cas où les concentrateurs 25 sont thermoplastiques, il est possible qu'ils fassent de même l'objet d'un ramollissement. Les extrémités ramollies desdits concentrateurs 25 de désagrègent alors en pénétrant le thermoplastique de la cavité 30. Le cloutage n'est plus que partiel et s'accompagne, en quelque sorte, d'un soudage.

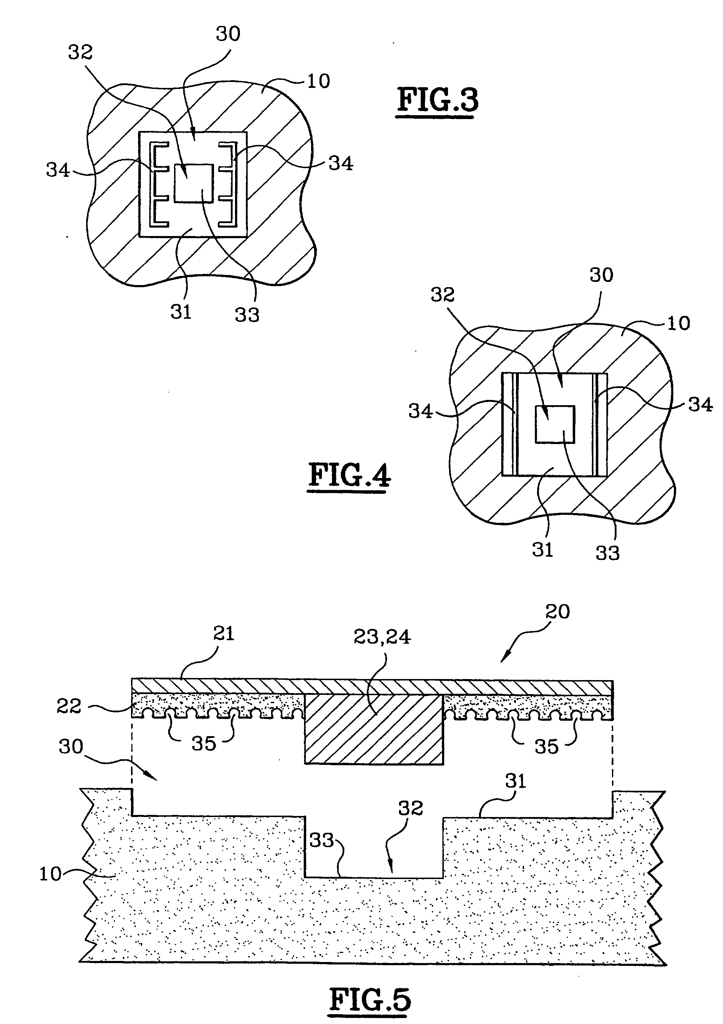

Le fond 31 de la cavité 30 illustré à la figure 2 comporte des concentrateurs 34 d'énergie thermoplastiques. Ces concentrateurs 34 constituent des parties thermoplastiques. Comme précédemment, ces concentrateurs 40 ont par exemple sensiblement une forme pyramidale ou alors constituent des profilés ou cordons à section sensiblement triangulaire. Dans ce dernier cas, ils peuvent être disposés au fond 31 de la cavité 30, selon les variantes présentées aux figures 3 et 4. A la figure 3, deux concentrateurs 34 sont disposés chacun d'un côté du logement 32 et définissent, en vue de dessus, un motif en forme de peigne. A la figure 4, deux concentrateurs 34, disposés de même de chaque côté du logement 32, forment deux cordons rectilignes.

Lorsque le module est soumis à une énergie vibratoire, cette énergie, concentrée à l'extrémité des concentrateurs 34 au contact du substrat 22 du module 20 engendre, des frottements à l'origine d'une augmentation de la température des concentrateurs 34 jusqu'à leur température de transition vitreuse Tg. Ces concentrateurs 34 font alors l'objet d'un ramollissement et soudent le module 20 dans la cavité 30 du corps 10 de carte assurant ainsi sa fixation.

Dans le cas où le substrat 22 est lui-même thermoplastique et que l'énergie vibratoire est suffisante, ce substrat 22 peut localement faire l'objet d'un ramollissement, la matière constitutive des concentrateurs 34 pénétrant alors ledit substrat 22, ce qui améliore la fixation du module 20, le soudage s'accompagnant, en quelque sorte, d'un cloutage.

Selon l'invention, le substrat 22 fait l'objet d'un traitement préalable, par exemple un sablage, de manière que celui-ci présente, sur sa face destinée à venir au contact du fond 31, des micro-cavités 35 débouchantes et par suite, une certaine rugosité.

Dans ce cas, l'énergie mécanique, principalement de frottements générée à l'interface entre le substrat 22 et la cavité 30, transformée en quantité de chaleur, est à l'origine d'un ramollissement du thermoplastique constitutif du fond 31 qui flue dans les micro-cavités 35 assurant ainsi, après refroidissement, la fixation du module 20.

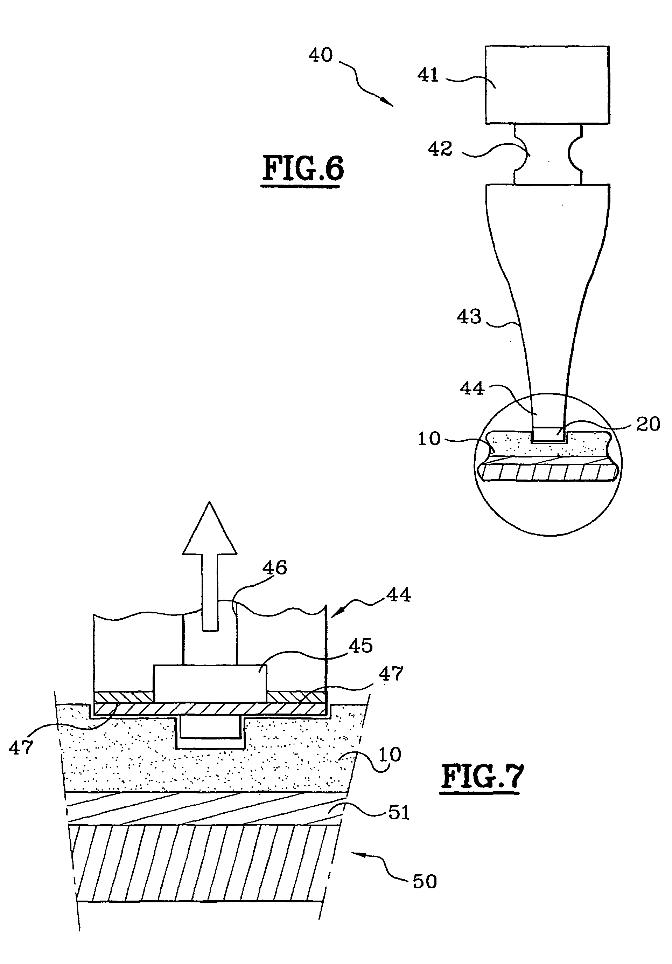

Un dispositif 40 permettant de générer des ultrasons est représenté à la figure 6. Il comporte un générateur 41 en courant électrique, un transducteur 42 éventuellement couplé à un amplificateur/modulateur, une sonotrode 43 dont l'extrémité est munie de moyens 44 de maintien du module 20. Le générateur 41 alimente le transducteur 42 en énergie électrique qui la transforme en énergie vibratoire et communique ladite énergie vibratoire aux moyens 44 de maintien du module 20, le long de la sonotrode 43. Cette énergie vibratoire est avantageusement modulée par l'amplificateur/modulateur.

Si l'on se rapporte maintenant à la figure 7, les moyens 44 de maintien du module sont formés d'une chambre 45 d'aspiration dans laquelle débouche un tube 46 d'aspiration relié à un système d'aspiration non représenté. La chambre 45 est ouverte en sa partie basse et ses bords 47 sont avantageusement couverts de Téflon (Marque déposée) ou de tout autre matériau destiné à assurer une protection efficace des plages 21 du module 20. En définitive, les moyens 44 sont adaptés aux dimensions du module 20 afin de la maintenir plaqué contre le fond 31 de la cavité 30 durant le temps nécessaire à l'assemblage.

Ainsi, lorsque le système d'aspiration est activé, un vide est généré à l'intérieur de la chambre 45. Les moyens 44 sont alors aptes à maintenir un module 20, les bords 47 de la chambre 45 étant en contact avec la surface des plages 21 dudit module 20.

En vue d'éviter toute déformation de la cavité 30 et notamment du fond 33 du logement 32, le corps 10 de carte est posé sur des moyens de posages appropriés qui comportent un revêtement 51 destiné à absorber une partie des vibrations transmises par le corps 10 de carte, ledit revêtement étant constitué par exemple d'une couche de silicone. Le fond 33 du logement 31 reste intact. Le corps de carte ne présente pas de déformation au regard dudit fond 33, à sa face opposée à la face portant des plages 21 de contact.

Le module 20 est alors reporté dans la cavité 30, la partie centrale dudit module 20 étant placée dans le logement 32, sa partie latérale reposant sur le fond 31. Eventuellement, une certaine pression est appliquée sur le module 20. Puis, une énergie vibratoire est transmise au module 20. Les parties thermoplastiques de la cavité 30 s'échauffent et font l'objet d'un ramollissement à leur température de transition vitreuse.

Pour assurer un meilleur contrôle de l'énergie vibratoire, on règle le dispositif 40 de manière l'onde vibratoire soit stationnaire, les ventres et les noeuds de vibration étant situés toujours à la même hauteur.

## Revendications

1. Procédé de fixation d'un module (20) électronique dans une cavité (30) d'un corps (10) d'objet portable, notamment corps de carte, ledit module (20) électronique comportant un composant (23) à circuits intégrés, le composant étant connecté à des plages (21) de contact portées par un substrat (22), le procédé comprenant les étapes suivantes selon lesquelles :
- on reporte le module (20) électronique dans la cavité (30) du corps (10) d'objet portable ; et
- on soumet ledit module (20) électronique à une énergie ultrasonore de manière que des parties thermoplastiques de la cavité (30) atteignent leur température de transition vitreuse,
et **caractérisé en ce que** le procédé comprend en outre une étape préalable de traitement du substrat (22) du module (20) électronique de manière que ledit substrat (22) présente, sur sa face au regard de la cavité (30), des micro-cavités (35).

2. Procédé selon la revendication 1, **caractérisé en ce que** les parties thermoplastiques de la cavité (30) sont en polychlorure de vinyle, acrylonitrile butadiène styrène, polyéthylène téréphtalate ou en polycarbonate.

3. Procédé selon l'une des revendications 1 ou 2, **caractérisé en ce que** le substrat (22) est en époxy ou en polycarbonate.

4. Carte comprenant un corps (10) et un module électronique (20), le corps comprenant une cavité (30), le module électronique comprenant un composant (23) à circuits intégrés, le composant étant connecté à des plages (21) de contact portées par un substrat (22), le module électronique ayant été reporté dans la cavité du corps et ayant été soumis à une énergie ultrasonore de manière que des parties thermoplastiques de la cavité aient atteint leur température de transition vitreuse, **caractérisé en ce que** le substrat (22) de module électronique (20) présente des microcavités (35) sur sa face au regard de la cavité (30), la partie thermoplastique constitutif du fond (31) de la cavité (30) ayant flué dans les microcavités.

## Patentansprüche

1. Befestigungsverfahren eines Elektronikmoduls (20) in einer Kavität (30) eines tragbaren Objektkörpers (10), insbesondere eines Kartenkörpers, wobei besagtes Elektronikmodul (20) ein Bauteil (23) mit integrierten Schaltungen umfasst und dieses mit Kontaktflächen (21) verbunden ist, die von einem Substrat (22) getragen werden und das Verfahren die folgenden Schritte umfasst, gemäß denen:
- das Elektronikmodul (20) in die Kavität (30) des tragbaren Objektkörpers (10) eingesetzt wird; und
- man besagtes Elektronikmodul (20) einer Ultraschallenergie aussetzt, so dass thermoplastische Bereiche der Kavität (30) ihre Glasübergangstemperatur erreichen,
**dadurch gekennzeichnet, dass** das Verfahren zudem einen vorausgehenden Behandlungsschritt des Substrats (22) des Elektronikmoduls (20) umfasst, so dass besagtes Substrat (22) auf der der Kavität (30) zugewendeten Seite Mikrokavitäten (35) aufweist.

2. Verfahren nach Anspruch 1, **dadurch gekennzeichnet, dass** die thermoplastischen Bereiche der Kavität (30) aus Polyvinylchlorid, Acrylnitril-Butadien-Styrol, Polyethylenterephtalat oder aus Polycarbonat sind.

3. Verfahren nach einem der Ansprüche 1 oder 2, **dadurch gekennzeichnet, dass** das Substrat (22) aus Epoxyd oder Polycarbonat ist.

4. Karte mit einem Körper (10) und einem Elektronikmodul (20), wobei der Körper eine Kavität (30) und das Elektronikmodul ein Bauteil (23) mit integrierten Schaltungen umfasst und das Bauteil mit Kontaktflächen (21) verbunden ist, die von einem Substrat (22) getragen werden, das Elektronikmodul in die Kavität des Körpers eingesetzt und derart einer Ultraschallenergie ausgesetzt wurde, dass thermoplastische Bereiche der Kavität ihre Glasübergangstemperatur erreicht haben, **dadurch gekennzeichnet, dass** das Substrat (22) des Elektronikmoduls (20) auf der der Kavität (30) zugewendeten Seite Mikrokavitäten (35) aufweist und der thermoplastische Bestandteil des Bodens (31) der Kavität (30) in die Mikrokavitäten geflossen ist.

## Claims

1. Method of attachment of an electronic module (20) in a cavity (30) of a portable object body (10), especially card body, said electronic module (20) including an integrated circuit component (23), the component being connected to contact pads (21) carried by a substrate (22), the method comprising the following steps according to which:
- the electronic module (20) is placed in the cavity (30) of the portable object body (10); and
- said electronic module (20) is subjected to ultrasound energy so that the thermoplastic parts of the cavity (30) reach their glass transition temperature,
and **characterised in that** the method also comprises a preliminary step to process the substrate (22) of the electronic module (20) to create micro-cavities (35) on said substrate (22), on its face opposite the cavity (30).

2. Method according to claim 1, **characterised in that** the thermoplastic parts of the cavity (30) are made from polyvinyl chloride, acrylonitrile butadiene styrene, polyethylene terephthalate or polycarbonate.

3. Method according to claim 1 or 2, **characterised in that** the substrate (22) is made from epoxy or polycarbonate.

4. Card comprising a body (10) and an electronic module (20), the body comprising a cavity (30), the electronic module comprising an integrated circuit component (23), the component being connected to contact pads (21) carried by a substrate (22), the electronic module having been placed in the cavity of the body and having been subjected to ultrasound energy so that the thermoplastic parts of the cavity have reached their glass transition temperature, **characterised in that** the substrate (22) of electronic module (20) displays microcavities (35) on its face opposite the cavity (30), the thermoplastic part forming the bottom (31) of the cavity (30) having flowed into the microcavities.
